Europäisches Patentamt

European Patent Office

Office européen des brevets

(11) Veröffentlichungsnummer: **0 505 852 A2**

## EUROPÄISCHE PATENTANMELDUNG

(21) Anmeldenummer: **92104367.5**

(22) Anmeldetag: **13.03.92**

(51) Int. Cl.5: **G01B 11/06**

(30) Priorität: **28.03.91 DE 4110230**

(43) Veröffentlichungstag der Anmeldung:
**30.09.92 Patentblatt 92/40**

(84) Benannte Vertragsstaaten:
**DE ES FR GB IT**

(71) Anmelder: **Firma Carl Zeiss**

**W-7920 Heidenheim (Brenz)(DE)**
(84) **DE ES FR IT**

(71) Anmelder: **CARL-ZEISS-STIFTUNG, HANDELND ALS CARL ZEISS**

**W-7920 Heidenheim an der Brenz(DE)**
(84) **GB**

(72) Erfinder: **Hohberg, Gerhard, Dr.**
**Hornbergstrasse 13**
**W-7080 Aalen-Dewangen(DE)**

(54) **Vorrichtung zur inteferometrischen Messung der Dicke einer transparenten Schicht.**

(57) Für die interferometrische Messung der Dicke von transparenten Probenschichten (11) mit Dicken, bei denen die Maxima und Minima nicht mehr ausreichend aufgelöst werden können, wird vor oder nach der Probenschicht (11) eine reale oder virtuelle, planparallele Referenzschicht (16) angeordnet, die annähernd die gleiche optische Dicke besitzt wie die Probenschicht (11).

FIG.1

EP 0 505 852 A2

Die vorliegende Erfindung betrifft eine Vorrichtung zur interferometrischen Messung der Dicke einer transparenten Probenschicht nach dem Oberbegriff des Anspruches 1.

Für die Dickenmessung an transparenten Schichten ist es bekannt, "weißes Licht", d.h. Strahlung eines genügend großen Wellenlängenbereichs, zu verwenden. Wird eine derartige Strahlung von einer transparenten Schicht reflektiert, dann legen die an der vorderen und hinteren Grenzfläche reflektierten Anteile unterschiedliche Wege zurück. Bei ihrer überlagerung entstehen Interferenzen, d.h. je nach dem Verhältnis von optischer Schichtdicke und Wellenlänge wird die reflektierte Strahlung entweder verstärkt oder geschwächt bzw. ausgelöscht.

Bei geringen Schichtdicken, in der Größenordnung von 1 $\mu$m, ergeben sich dabei sichtbare Farberscheinungen, die sog. Farben dünner Plättchen, die man an öllachen, Seifenblasen etc. beobachten kann. Bei dicken Schichten liegen die Wellenlängen der Interferenzmaxima und -minima so nahe beieinander, daß sie für das Auge nicht zu unterscheiden sind und daher das reflektierte Licht als unbunt empfunden wird. Führt man dieses Licht jedoch einem Spektrometer mit genügender spektraler Auflösung zu, dann sind Interferenzen erkennbar, aus deren Lage man die optische Dicke der Schicht berechnen kann.

Bei zunehmender Dicke der transparenten Schicht sind dem Verfahren praktische Grenzen gesetzt, die durch folgende zwei Effekte bewirkt werden:
1. Größere Schichtdicken bewirken eine feinere Modulation der Interferenzen. Zu ihrer Analyse sind Spektrometer mit hoher Auflösung und eine aufwendige Auswertung erforderlich.
2. Mit zunehmender Schichtdicke wächst die Abhängigkeit des Gangunterschiedes vom Einfallswinkel der Strahlung. Um nachweisbare Interferenzen zu erhalten, muß daher der Aperturwinkel begrenzt werden. Das führt zu optischen, vor allem energetischen Problemen, vor allem wenn, z.B. wegen Ungleichmäßigkeiten der Schichtdicke, die Meßfeldgröße begrenzt werden muß.

Für die Messung von größeren Schichtdicken ist aus einer Veröffentlichung von J. R. Sandercock (J. Phys. E: Sci. Instrum. 16, 866 (1983)) folgende Anordnung bekannt: Die Strahlung einer Glühlampe wird zunächst an einer Referenzschicht und dann an der zu messenden Schicht reflektiert. Danach fällt sie auf einen Detektor, der eine möglichst konstante Empfindlichkeit für einen großen Spektralbereich hat und die integrale Intensität der auf ihn fallenden Strahlung mißt. Wenn die Dicke der Referenzschicht gleich der Dicke der zu messenden Schicht ist, fällt auf den Detektor die größtmögliche Strahlungsintensität. Die Referenzschicht ist daher keilförmig mit zunehmender Dicke ausgebildet und sitzt auf einer kreisförmigen Scheibe, die um ihre Achse gedreht wird, so daß die Dicke der den Strahlengang reflektierenden Referenzschicht kontinuierlich so verändert werden kann, daß das Detektorsignal seinen maximalen Wert erreicht.

Diese bekannte Vorrichtung hat folgende Nachteile: Die Dicke und Gleichmäßigkeit der Referenzschicht geht unmittelbar in die Meßgenauigkeit ein, so daß auch bei großem Herstellungsaufwand nur eine begrenzte Meßgenauigkeit möglich ist. Außerdem hat die Vorrichtung bewegte Teile und die Meßzeit von 2 bis 3 Sekunden ist relativ lang, so daß z.B. eine Messung an laufenden Bahnen mit einer transparenten Schicht nicht möglich ist.

Der vorliegenden Erfindung liegt daher die Aufgabe zugrunde, eine Vorrichtung zur Messung der Dicke von transparenten Schichten zu schaffen, die genaue Messungen mit kurzen Meßzeiten auch bei großen Schichtdicken ermöglicht.

Die gestellte Aufgabe wird erfindungsgemäß durch den kennzeichnenden Teil des Anspruches 1 gelöst. Dabei wird im Gegensatz zu der bekannten keilförmigen Referenzschicht eine planparallele Referenzschicht verwendet, deren Dicke mit bekannten Methoden sehr genau bestimmt werden kann. Außerdem wird im Gegensatz zu der bekannten Vorrichtung der wellenlängenabhängige Intensitätsverlauf gemessen.

In einer besonders vorteilhaften Ausführungsform ist die Referenzschicht eine planparallele Platte mit ausreichend ebenen Oberflächen. In diesem Fall hat man eine reale Referenzschicht, bzw. ein Perot-Fabry-Interferometer.

In einer anderen vorteilhaften Ausführungsform wird die Referenzschicht durch ein Michelson-Interferometer realisiert. Man hat dann eine virtuelle Referenzschicht, die den Vorteil bietet, daß ihre Dicke kontinuierlich veränderbar ist.

Eine virtuelle Referenzschicht läßt sich auch durch andere Interferometer bzw. interferometrische Anordnungen realisiern, z.B. durch ein Kösterssches Prisma und zwei Reflexionsspiegel.

In einer weiteren besonders vorteilhaften Ausführungsform erfolgt die Zuführung der Strahlung der Lichtquelle zur Probenschicht und die Abführung der reflektierten Strahlung zur Empfangseinrichtung über ein Y-förmigen Lichtleiter.

Es ist vorteilhaft, die Strahlung der Lichtquelle auf der Probenschicht zu fokussieren. Dann hat man nicht nur eine kleine Meßfläche, sondern auch eine geringe Empfindlichkeit gegen kleine Verkippungen der Probenschicht gegenüber der optischen Vorrichtung. Es ist jedoch auch möglich, die Strahlung nicht auf der Probenschicht zu fokussieren oder sogar mit einem parallelen Strahlungsbündel zu arbeiten, wenn die oben genannten Eigenschaften tolerierbar sind.

Weitere vorteilhafte Ausgestaltungen der Erfindung gehen aus den abhängigen Ansprüchen und den Erläuterungen zu den Figuren hervor.

Die Erfindung wird im folgenden anhand von in den Figuren 1 bis 5 dargestellten Ausführungsbeispielen näher erläutert. Dabei zeigen:

Fig. 1    eine Vorrichtung mit einer planparallelen Platte, die vor der Probenschicht angeordnet ist,

Fig. 2    eine Vorrichtung wie in Fig. 1, jedoch mit einem Y-förmigen Lichtleiter,

Fig. 3    eine Vorrichtung wie in Fig. 2, bei der jedoch die planparallele Platte in der Nähe der Lichtquelle angeordnet ist,

Fig. 4    eine Vorrichtung mit einem Michelson-Interferometer und

Fig. 5    eine Vorrichtung mit einem Köstersschen Doppelprisma.

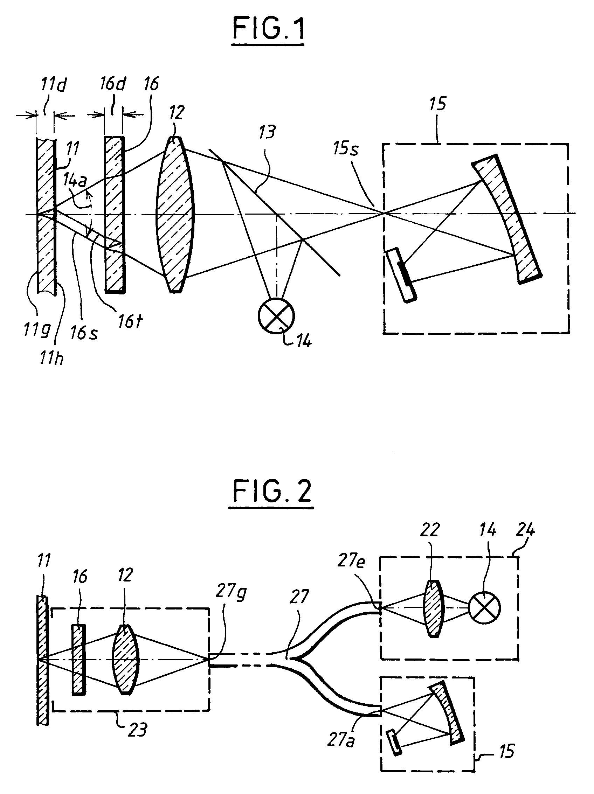

In Figur 1 ist mit (11) eine transparente Probenschicht bezeichnet, deren Dicke (11d) gemessen werden soll. Die Probenschicht (11) wird über die Linse (12) und den Strahlteiler (13) von einer Lichtquelle (14) beleuchtet, welche Strahlung eines ausreichend großen Wellenlängenbereiches aussendet. Die an den beiden Grenzflächen (11g, 11h) reflektierten Strahlungskomponenten werden durch die Linse (12) über den Strahlteiler (13) auf den Spalt (15s) eines Spektralphotometers (15) fokussiert. Mit diesem Spektralphotometer wird der wellenlängenabhängige Intensitätsverlauf gemessen. Dieser zeigt bei einer Dicke (11d) der Probenschicht (11) von ca. 1 bis 50 $\mu$m durch Interferenz der an den beiden Grenzflächen (11g, 11h) reflektierten Strahlungskomponenten ausgeprägte Maxima und Minima, die in bekannter Weise zur Ermittlung der genauen Dicke (11d) der Schicht (11) benutzt werden können.

Bei einer Dicke der Schicht von mehr als 100 $\mu$m versagt diese Methode wegen den in der Einleitung aufgeführten Gründen. Bringt man jedoch bei einer dicken Schicht entsprechend der Erfindung eine Referenzschicht in Form einer planparallelen Platte (16), deren optische Dicke ungefähr gleich der optischen Dicke der Probenschicht (11) ist, in den Strahlengang, dann treten zusätzliche Interferenzen auf, die leicht erfaßt und gemessen werden können. Diese Interferenzen entstehen durch Überlagerung der mit (16s) und (16t) bezeichneten Strahlungskomponenten. Ihre Wegdifferenz kann durch Wahl einer geeigneten Dicke (16d) der planparallelen Platte (16) in jedem Fall so klein gemacht werden, daß die spektrale Auflösung des Spektrometers ausreicht, um die durch sie entstehenden Maxima und Minima ausreichend gut aufzulösen, auch wenn weder die durch die Probenschicht (11) noch durch die planparallelen Platte (16) entstehenden Interferenzen aufgelöst werden können.

Wenn die Probenschicht (11) und die planparallele Platte (16) die gleiche Brechzahl haben, dann ist auch die Winkelabhängigkeit der Interferenz so als ob diese an der Differenz zwischen Probenschicht (11) und Platte (16) erfolgen würde. Dann kann ein entsprechend großer Aperturwinkel (14a) zugelassen werden, ohne daß der Interferenzkontrast verwischt wird.

Die planparallele Platte (16) hat in diesem Ausführungsbeispiel die Funktion eines Perot-Fabry-Interferometers. Da die Platte im Durchlicht benutzt wird, ist der Interferenzkontrast gering. Durch Aufbringen von teildurchlässigen Schichten auf beiden Seiten der Platte (16) kann jedoch der Kontrast erhöht werden. Die Tatsache, daß die Platte (16) in dieser Anordnung zweimal durchstrahlt wird, hat auf die Funktion keinen Einfluß, vermindert jedoch die nutzbare Strahlungsenergie geringfügig.

Die Auswertung der erhaltenen Maxima und Minima im gemessenen wellenlängenabhängigen Intensitätsverlauf ist hinreichend bekannt, z.B. aus der DE-OS 35 16 538 (US-PS 4 781 455); sie ergibt bei den hier beschriebenen Vorrichtungen die Differenz der optischen Dicken von Probenschicht (11) und planparalleler Platte (16).

In Figur 2 ist eine besonders vorteilhafte Ausgestaltung der Erfindung dargestellt, bei welcher ein Y-förmiger Lichtleiter (27) verwendet wird. Die Strahlung der Lichtquelle (14) wird mit Hilfe des Kondensors (22) in die Eintrittsfläche (27e) des einen Zweiges geleitet und durch den Lichtleiter zur gemeinsamen Endfläche (27g) geführt. Die dort entstehende Strahlung wird wieder von einer Linse (12) über die planparallel Platte (16) auf die Probenschicht (11) fokussiert. Das an Probenschicht (11) und Platte (16) reflektierte Licht gelangt durch den Lichtleiter (27) zu seinem anderen Zweig, dessen Austrittsfläche (27a) zweckmäßigerweise als Eintrittsspalt des Spektrometers (15) ausgebildet ist. Auf diese Weise hat die Vorrichtung einen frei beweglichen Meßkopf (23), der nur über den flexiblen Lichtleiter (27) mit der Beleuchtungseinheit (24) und dem Spektrometer (15) verbunden ist.

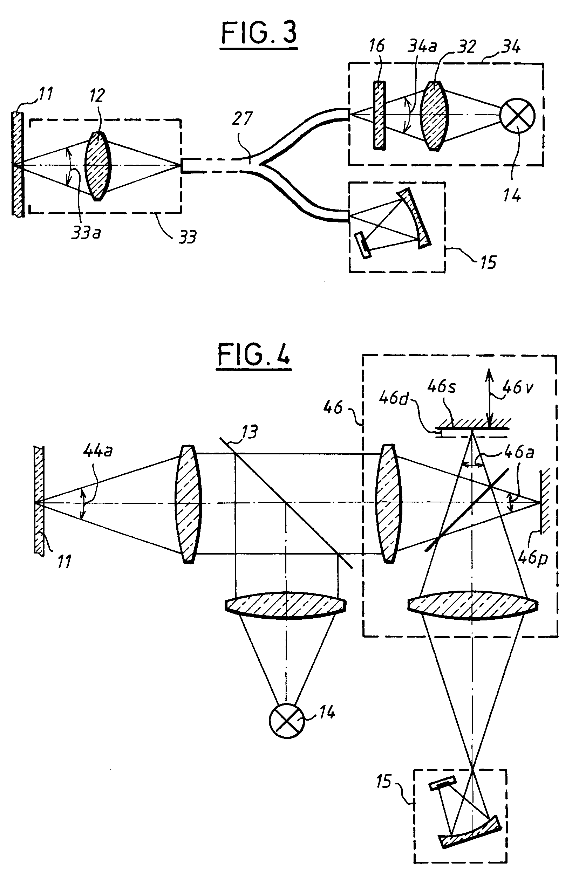

In Figur 3 ist die planparallele Platte (16) nicht im Meßkopf (33) untergebracht. Da Lichtleiter die Eigenschaft haben, die Neigungswinkel der Strahlen zwischen Ein- und Austritt recht genau zu erhalten, kann die planparallele Platte (16) auch in der Beleuchtungseinheit (34) untergebracht werden. Es muß dann aber darauf geachtet werden, daß die Aperturwinkel (34a) und (33a) gleich sind.

Die Unterbringung der Planplatte (16) in der Beleuchtungseinheit (34) hat die Vorteile, daß die Platte nicht der möglicherweise mechanisch und thermisch belasteten Probenumgebung ausgesetzt ist und daß sie nur einmal durchstrahlt wird. Außerdem ist es möglich, in der Beleuchtungseinheit (34) mehrere Planplatten einzubauen, die nach Bedarf gewechselt werden können.

Eine Planplatte - also ein Perot-Fabry-Interferometer - ist ein einfaches Mittel zur Realisierung einer planparallelen Referenzschicht; sie ist robust und hat eine geringe Baugröße. Will man jedoch die Referenzschicht variabel machen, dann ist es vorteilhaft, andere Interferometer zu verwenden. Als Beispiel zeigt die Figur 4 eine Vorrichtung mit einem Michelson-Interferometer (46), in welches die von der Probenschicht (11) reflektierte Strahlung durch die Teilerschicht (13) gelangt. Führt man z.B. den Spiegel (46s) senkrecht zu seiner reflektierenden Fläche - also in Richtung des Doppelpfeiles (46v) - verstellbar aus, dann kann eine variable Wegdifferenz (46d) zwischen den auf die Spiegel (46s) und (46p) fallenden Strahlungskomponenten eingestellt werden, d.h. das Interferometer (46) erfüllt die Funktion einer planparallelen Referenzschicht mit der Dicke (46d), wirkt also als virtuelle Referenzschicht. Für eine einwandfreie Funktion der Vorrichtung ist wiederum wichtig, daß die Aperturwinkel (46a) der auf die Spiegel (46s) und (46p) fallenden Strahlungskomponenten dem Aperturwinkel (44a) der auf die Probenschicht (11) fallenden Strahlung möglichst gleich sind.

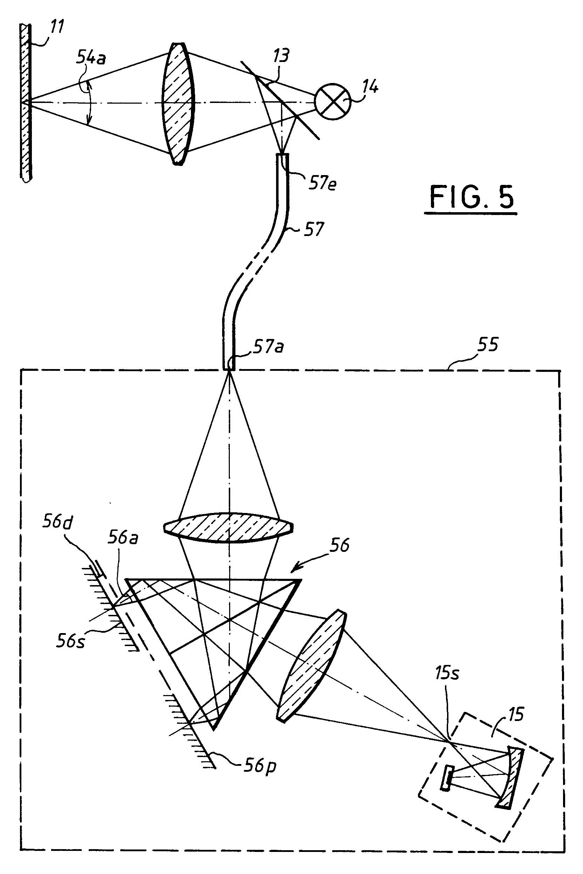

Figur 5 zeigt ein weiteres Ausführungsbeispiel mit einem Interferometer mit variabler, virtueller, planparalleler Schicht. Hier wird die von der Probenschicht (11) reflektierte Strahlung über den Strahlteiler (13) auf die Eintrittsfläche (57e) des Lichtleiters (57) fokussiert. Dieser Lichtleiter erlaubt wieder die Aufteilung der Vorrichtung in einen frei beweglichen Meßkopf und eine stationäre Meßeinrichtung (55).

Die aus der Austrittsfläche (57a) des Lichtleiters (57) austretende Strahlung wird von einem bekannten Köstersschen Prisma (56) in zwei Strahlungskomponenten aufgeteilt, die an den Spiegeln (56s) und (56p) reflektiert werden und nach ihrer Zusammenführung zum Eintrittsspalt (15s) des Spektrometers (15) gelangen. Wenn z.B. der Spiegel (56s) senkrecht zu seiner reflektierenden Fläche verstellbar ist, dann wirkt auch diese interferometrische Einrichtung wie eine planparallele Referenzschicht mit der Dicke (56d), stellt also eine virtuelle Referenzschicht dar. Auch in diesem Fall ist es für eine einwandfreie Funktion wichtig, daß die Aperturwinkel (56a) der auf die Spiegel (56s) und (56p) fallenden Strahlungskomponenten dem Aperturwinkel (54a) der auf die Probenschicht (11) fallenden Strahlung möglichst gleich sind.

Als Spektralphotometer (15) eignet sich bei den beschriebenen Vorrichtungen besonders gut ein bekanntes Diodenzeilen-Spektrometer, welches in den Figuren zum Teil erheblich verkleinert dargestellt ist. Ein Diodenzeilen-Spektrometer hat den Vorteil, daß es die schnelle Messung eines Spektralbereiches erlaubt und leicht mit einem Computer zur Auswertung verbunden werden kann.

## Patentansprüche

1. Vorrichtung zur interferometrischen Messung der Dicke einer transparenten Probenschicht (11), bestehend aus einer Lichtquelle (14) für weißes Licht, einer Referenzschicht (16), die annähernd die gleiche optische Dicke besitzt wie die Probenschicht (11) und die vor oder nach der Probenschicht (11) von der Strahlung der Lichtquelle (14) durchlaufen wird, und einer Empfangseinrichtung (15), dadurch gekennzeichnet, daß die Referenzschicht planparallel und real (16d) oder virtuell (46d, 56d) ist und daß die Empfangseinrichtung ein Spektrometer (15) zur Messung des wellenlängenabhängigen Intensitätsverlaufes ist.

2. Vorrichtung nach Anspruch 1, dadurch gekennzeichnet, daß die Referenzschicht eine planparallele Platte (16) (Perot-Fabry-Interferometer) ist.

3. Vorrichtung nach Anspruch 2, dadurch gekennzeichnet, daß die planparallele Platte (16) unmittelbar vor der Probenschicht (11) angeordnet ist.

4. Vorrichtung nach Anspruch 1, dadurch gekennzeichnet, daß die Referenzschicht (46d) virtuell von einem Michelson-Interferometer (46) realisiert ist.

5. Vorrichtung nach Anspruch 1, dadurch gekennzeichnet, daß die Referenzschicht (56d) virtuell durch ein Kösterssches Doppelprisma (56) und zwei Reflexionsspiegel (56s, 56p) realisiert ist.

6. Vorrichtung nach Anspruch 1 bis Anspruch 5, dadurch gekennzeichnet, daß die Referenzschicht (56d) vor dem Spektrometer (15) angeordnet ist und mit der Probenschicht (11) über einen Lichtleiter (57) optisch verbunden ist (Fig. 5).

7. Vorrichtung nach einem der Ansprüche 1 bis 5, dadurch gekennzeichnet, daß die Referenzschicht (16) zusammen mit der Lichtquelle (14) in einer Beleuchtungseinheit (34) angeordnet ist und mit der Probenschicht (11) über einen Lichtleiter (27) optisch verbunden ist (Fig. 3).

8. Vorrichtung nach einem der Ansprüche 1 bis 5, dadurch gekennzeichnet, daß für die Zuführung der Strahlung der Lichtquelle (14) zur Probenschicht (11) und für die Abführung der reflektierten Strahlung zum Spektrometer (15) ein Y-förmiger Lichtleiter (27) vorgesehen ist (Fig. 2).

9. Vorrichtung nach einem der Ansprüche 1 bis 8, dadurch gekennzeichnet, daß die Strahlung der Lichtquelle (14) auf der Probenschicht (11) fokussiert ist.

10. Vorrichtung nach einem der Ansprüche 1 bis 9, dadurch gekennzeichnet, daß das Spektrometer ein Diodenzeilenspektrometer (15) ist.

## FIG.1

## FIG. 2

FIG.3

FIG.4

FIG. 5